# EUROPÄISCHE PATENTSCHRIFT

(11) **EP 1 975 458 B1**
(45) Veröffentlichungstag und Bekanntmachung des Hinweises auf die Patenterteilung: **11.05.2016**
(21) Anmeldenummer: 08003878.9
(22) Anmeldetag: 03.03.2008
(51) Int. Cl.: F16F 15/129, F16F 15/123

(54) **Vorrichtung zur Dämpfung von Drehschwingungen einer Welle**
Magnetic device for dampening rotation vibration of a shaft
Dispositif d'amortissement de vibrations de torsion d'un arbre

(30) Priorität: 26.03.2007 DE 102007014306
(43) Veröffentlichungstag der Anmeldung: 01.10.2008
(73) Patentinhaber: Schaeffler Technologies AG & Co. KG, 91074 Herzogenaurach (DE)
(72) Erfinder: Lehmann, Steffen, 76275 Ettlingen (DE); Voit, Alexander, 77815 Bühl (DE); Müller, Klaus, 77876 Kappelrodeck (DE)

(56) Entgegenhaltungen:
- EP-A1- 0 251 849
- DE-A1- 19 745 382
- DE-A1- 19 922 884
- FR-A1- 2 770 268

## Beschreibung

Die vorliegende Erfindung betrifft eine Vorrichtung zur Dämpfung von Drehschwingungen einer Welle.

Es ist bekannt, an Kurbelwellen von Brennkraftmaschinen Schwingungsdämpfer zu verwenden, bei denen eine Masse viskos oder elastisch bezüglich der Drehung mit der Kurbelwelle verbunden ist. Bei einer elastischen Verbindung werden üblicherweise Elastomere als Koppelelemente verwendet. Nachteilig an bekannten Schwingungsdämpfern ist, dass diese eine nur vergleichsweise geringe Dämpfungswirkung erzielen.

Aus den Offenlegungsschriften EP 0 251 849 A1 und FR 2 770 268 A1 sind Vorrichtungen zur Dämpfung von Drehschwingungen einer Welle mit einer wellenfesten ersten Baugruppe und eine gegenüber dieser relativ um eine Drehachse der Welle drehbare zweite Baugruppe bekannt, wobei zwischen erster und zweiter Baugruppe mindestens ein Energiespeicher angeordnet ist, der bei einer Relativdrehung der ersten Baugruppe gegenüber der zweiten Baugruppe Energie speichert. Weiterhin ist eine Trockenreibarbeit verrichtendes Dämpferelement vorgesehen, welches Reibbeläge umfasst, die jeweils drehfest mit der ersten Baugruppe bzw. der zweiten Baugruppe verbunden sind und aufeinander reibend gleiten können.

Eine Aufgabe der vorliegenden Erfindung ist es daher, eine Vorrichtung zur Dämpfung von Drehschwingungen einer Welle anzugeben, die bei gleicher Masse gegenüber Vorrichtungen nach Stand der Technik eine größere Dämpfungswirkung aufweist.

Dieses Problem wird gelöst durch eine Vorrichtung mit den Merkmalen des Patentanspruchs 1.

Grundsätzlich funktionieren Kurbelwellentorsionssschwingungsdämpfer bzw. -tilger nach dem Prinzip des phasenverschobenen Energieaustausches zwischen der Kurbelwelle und dem Dämpfer. Je größer die Energie ist, die ein Dämpfer zwischenspeichern kann, umso besser ist seine dämpfende Wirkung auf die Kurbelwellenschwingungen. Sowohl viskositäts- als auch elastomergekoppelte Dämpfer speichern den Großteil der Energie in ihrer trägen Schwungmasse, da ihr Koppelelement, dies ist ein viskoses Fluid oder ein Elastomer, relativ wenig Energie aufnehmen kann. Der erfindungsgemäße Dämpfer mit Federspeichern, dies sind insbesondere Stahlfedern, hat aufgrund des hohen Energieaufnahmevermögens der Federn deutliche Funktionsvorteile gegenüber Vorrichtungen zur Dämpfung von Drehschwingungen nach Stand der Technik. Insbesondere ist die Dämpfungswirkung erheblich größer bei gleichen trägen Schwungmassen gegenüber Schwingungsdämpfern nach Stand der Technik. Um eine gegenüber Schwingungsdämpfern nach Stand der Technik ähnliche Dämpfungswirkung zu erzielen, ist es mit dem erfindungsgemäßen Vorrichtung zur Dämpfung von Schwingungen möglich, bei gleich bleibender oder gar besserer Dämpfungswirkung ca. 20% weniger Schwungmasse einzusetzen als bei Torsionsschwingungsdämpfern nach Stand der Technik.

Es ist vorgesehen, dass der Energiespeicher mindestens eine Druckfeder umfasst, die in Ausschnitten der ersten und zweiten Baugruppe eingespannt ist. Bei einer Relativdrehung der ersten gegenüber der zweiten Baugruppe wird die Druckfeder zusammengedrückt und speichert Energie. Derartige Druckfedern sind handelsüblich und daher kostengünstig. Die Vorrichtung zur Dämpfung von Drehschwingungen umfasst mindestens ein Dämpferelement, das bei einer Relativdrehung der ersten Baugruppe gegenüber der zweiten Baugruppe Energie dissipiert. Das Dämpferelement verrichtet trockene oder viskose Reibarbeit, wobei das Dämpferelement Reibbeläge umfasst, die jeweils drehfest mit der ersten Baugruppe bzw. der zweiten Baugruppe verbunden sind und aufeinander reibend gleiten können. Es ist weiter vorgesehen, dass das Dämpferelement ein vorderes Reibelement umfasst, das fest mit der ersten Baugruppe verbunden ist, wobei ein vorderer äußerer Reibring und/oder ein vorderer innerer Reibring, die fest mit der zweiten Baugruppe verbunden sind, in Reibkontakt mit dem vorderen Reibelement sind.

Der vordere äußere Reibring und der vordere innere Reibring sind vorzugsweise Teil einer vorderen Wellscheibe, die bevorzugt mittels Bolzen oder einer Klebeverbindung drehfest mit der ersten Baugruppe verbunden ist. Das Dämpferelement umfasst bevorzugt ein hinteres Reibelement, das fest mit der ersten Baugruppe verbunden ist, wobei ein hinterer äußerer Reibring und/oder ein hinterer innerer Reibring, die fest mit der zweiten Baugruppe verbunden sind, in Reibkontakt mit dem hinteren Reibelement sind. Der hintere äußere Reibring und der hintere innere Reibring sind vorzugsweise Teil einer hinteren Wellscheibe, die bevorzugt mittels Bolzen oder einer Klebeverbindung drehfest mit der ersten Baugruppe verbunden ist.

Vorzugsweise ist vorgesehen, dass die erste Baugruppe einen vorderen Flansch und einen hinteren Flansch umfasst, die fest miteinander verbunden sind und einen kurbelwellenfesten Flansch bilden. Durch die Zweiteilung ist der kurbelwellenfeste Flansch leichter herzustellen.

Die Verbindung des vorderen Flansches mit dem hinteren Flansch erfolgt bevorzugt durch Abstandsbolzen. Vorzugsweise weisen der vordere Flansch und der hintere Flansch in einem radial äußeren Bereich Kröpfungen auf, die einen ringförmigen Raum bilden. In dem ringförmigen Raum sind vorzugsweise Teile der Dämpfungseinrichtung sowie des Energiespeichers angeordnet. Die zweite Baugruppe umfasst bevorzugt eine Schwungmasse und einen Schwungmassenflansch, die eine Schwungmassenbaugruppe bilden.

Das eingangs genannte Problem wird auch gelöst durch ein Verfahren zur Dämpfung von Drehschwingungen einer Welle nach Patentanspruch 9.

Im Folgenden wird ein Ausführungsbeispiel der Erfindung anhand der beiliegenden Zeichnungen erläutert. Dabei zeigen:
- Fig. 1: eine Aufsicht auf ein Ausführungsbeispiel eines erfindungsgemäßen Kurbelwellendämpfers;
- Fig. 2: einen Schnitt gemäß I-I in Fig. 1;
- Fig. 3: die radial äußeren Bereiche in Fig. 2 in einer ersten vergrößerten Darstellung;
- Fig. 4: die radial äußeren Bereiche in Fig. 2 in einer zweiten vergrößerten Darstellung;
- Fig. 5: eine Einbausituation eines Kurbelwellendämpfers an einer Kurbelwelle;
- Fig. 6: ein Prinzipschaltbild des Kurbelwellendämpfers;
- Fig. 7: eine Explosionsdarstellung des Kurbelwellendämpfers.

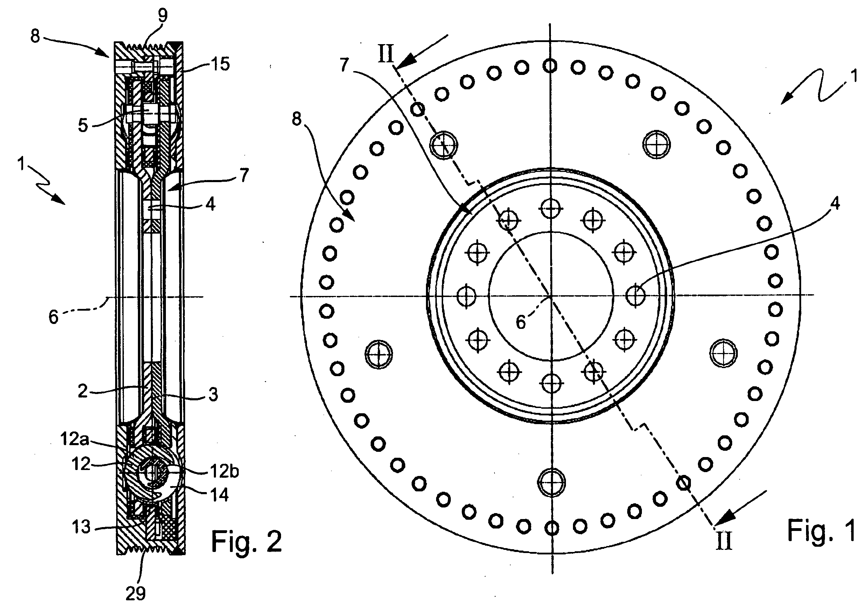

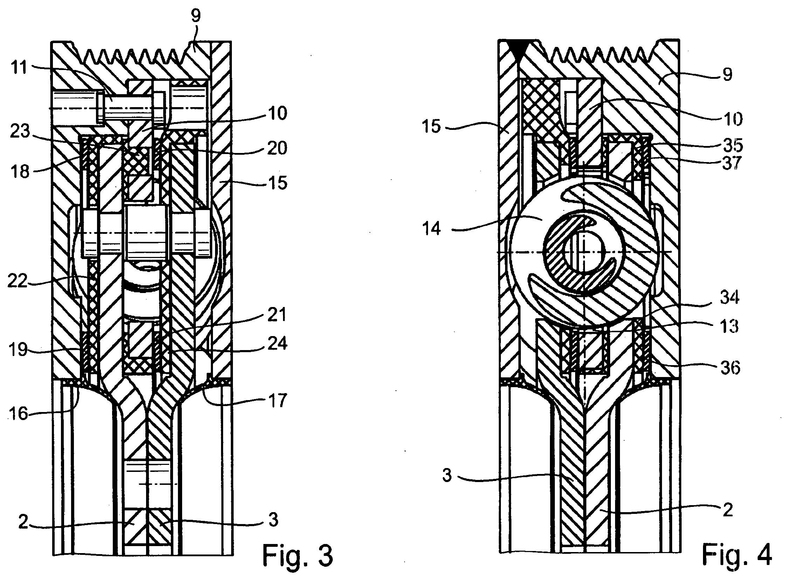

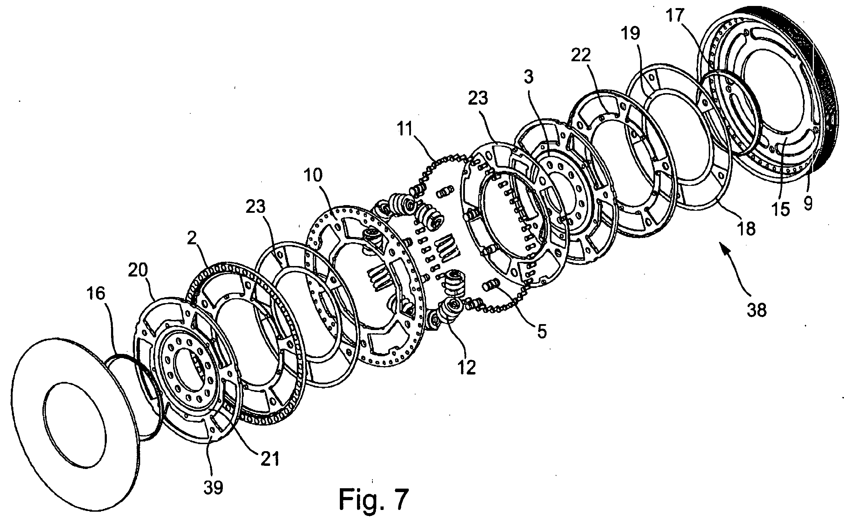

Fig. 1 zeigt eine Aufsicht auf einen Kurbelwellendämpfer 1, Fig. 2 zeigt einen Schnitt gemäß I-I in Fig. 1. Fig. 3 und Fig. 4 zeigen jeweils die radial äußeren Bereiche in Fig. 2 in vergrößerter Darstellung, Fig. 7 zeigt eine Explosionsdarstellung des Kurbelwellendämpfers 1. Der Kurbelwellendämpfer 1 umfasst einen vorderen Flansch 2 und einen hinteren Flansch 3. Die Flansche umfassen jeweils eine Vielzahl von Bohrungen 4, mit Hilfe derer der Kurbelwellendämpfer 1 an einer Kurbelwelle befestigt wird. Die beiden Flansche 2, 3 sind mit Abstandsbolzen 5 miteinander verbunden. Die Abstandsbolzen umfassen einen inneren zylindrischen Bereich mit einem großen Durchmesser, der größer ist als die beiden äußeren zylindrischen Bereiche, die durch Bohrungen der beiden Flansche ragen. Die Abstandsbolzen sind jeweils von außen mit Nietköpfen versehen. Der vordere Flansch 2 und der hintere Flansch 3 bilden einen kurbelwellenfesten Flansch 7, der bezüglich der Drehung um eine Drehachse 6 fest mit der Kurbelwelle verbunden ist. Der vordere Flansch 2 und der hintere Flansch 3 weisen in einem radial äußeren Bereich Kröpfungen 30, 31 auf, die einen ringförmigen Raum 32 bilden. Um die Drehachse 6 relativ drehbar gegenüber dem kurbelwellenfesten Flansch 7 ist eine Schwungmassenbaugruppe 8 angeordnet. Diese umfasst eine Schwungmasse 9, die fest mit einem Außenflansch 10 verbunden ist. Die Schwungmassenbaugruppe 8 ist also gegenüber dem kurbelwellenfesten Flansch 7 um die Drehachse 6 relativ drehbar. Der Schwungmassenflansch 10 ist über Nieten 11 mit der Schwungmasse 9 verbunden. Die Schwungmassenbaugruppe 8 ist über Federn 12 federnd bezüglich der Drehung um die Drehachse 6 gegenüber dem kurbelwellenfesten Flansch 7 gelagert. Die Federn 12 sind Druckfedern, die zwei koaxial geführte Federn, beispielsweise wie in Fig. 2 dargestellt eine äußere Feder 12a und eine innere Feder 12b, umfassen. Die Federn 12 sind Druckfedern, die in Ausschnitten 13 des Schwungmassenflansches und Ausschnitten 14 des kurbelwellenfesten Flansches 7 gelagert sind. Bei einer Relativdrehung des kurbelwellenfesten Flansches 7 gegenüber dem Schwungmassenflansch 10 werden die Federn 12 komprimiert, so dass die Wirkung die einer Torsionsfeder zwischen dem kurbelwellenfesten Flansch 7 und der Schwungmassenbaugruppe 8 ist. Die Federn 12 sind in der Nullstellung der Schwungmassenbaugruppe 8 gegenüber dem kurbelwellenfesten Flansch 7 bereits vorgespannt. Eine Deckscheibe 15 ist fest mit der Schwungmasse 9 verbunden, beispielsweise verschweißt. Eine vordere Dichtscheibe 16 und eine hintere Dichtscheibe 17, die vorzugsweise aus Kunststoff gefertigt sind, dichten den von der Schwungmassenbaugruppe 8 umschlossenen Bereich des kurbelwellenfesten Flansches 7 gegenüber der Umgebung vor Schmutz und Feuchtigkeit ab. Zur Erzeugung einer Reibungsdämpfung sind in dem Kurbelwellendämpfer 1 axial wirkende Wellscheiben mit Reibringen angeordnet, die ein Dämpferelement 33 bilden, das bei einer Relativdrehung des kurbelwellenfesten Flansches 7 gegenüber der Schwungmassenbaugruppe 8 Energie dissipiert. Es handelt sich hier um ein vorderer äußerer Reibring18, ein vorderer innerer Reibring19, ein mittlerer äußerer Reibring 20 und ein mittlerer innerer Reibring 21. Die Reibringe 18 bis 21 sind jeweils drehfest mit der Schwungmassenbaugruppe 8 verbunden und stützen sich reibend auf Reibelementen 22 bis 24 ab. Der vordere äußere Reibring 18 und der vordere innere Reibring19 stützen sich auf einem vorderen Reibelement 22 ab, das fest mit dem vorderen Flansch 2 verbunden ist. Der hintere äußere Reibring 20 und der hintere innere Reibring 21 stützen sich auf einem hinteren Reibelement 24 ab, das fest mit dem hinteren Flansch 3 verbunden ist. Zwischen dem vorderen Flansch 2 und dem hinteren Flansch 3 ist ein mittleres Reibelement 20 angeordnet, dass unmittelbar in reibendem Kontakt mit dem Schwungmassenflansch 10 steht. Die inneren und äußeren Reibringe sind jeweils miteinander verbunden und bilden, wie insbesondere anhand der Explosionszeichnung Fig. 7 zu erkennen ist, jeweils scheibenförmige Baugruppen. Der vordere äußere Reibring 18 und der vordere innere Reibring 19 sind Teil einer vorderen Wellscheibe 38. Diese ist mittels Bolzen drehfest mit der Schwungmasse 9 verbunden. Der hintere äußere Reibring 20 und der hintere innere Reibring 21 sind Teil einer hinteren Wellscheibe 39. Diese ist mittels Bolzen drehfest mit der Schwungmasse 9 verbunden. Die Reibelemente bestehen vorzugsweise aus Kunststoff, das vordere Reibelement 20 und das hintere Reibelement 24 dienen zusätzlich als Gleitlager zur Zentrierung der Schwungmassenbaugruppe 8 auf dem Kurbelwellenflansch 7.

Der Kurbelwellendämpfer 1 kann in dem durch die Dichtscheiben 16 und 17 nach außen abgedichteten Bereich zusätzliche zur Verschleißreduzierung mit Fett gefüllt sein, es kann hier aber auch ein trockenes Konzept mit trockenen Reibbelägen, wie anhand des Ausführungsbeispiels zuvor dargestellt, verfolgt werden. An Stelle der Reibeinrichtung ist es möglich, den Dämpfer mit einem viskosen Medium zu füllen, der Dämpfer wirkt dann wie ein Viskositätsdämpfer mit zusätzlicher Federkopplung. Dies kann beispielsweise bewirkt werden, indem der nach außen durch die Dichtscheiben 16 und 17 abgedichtete Raum mit einem Hydrauliköl oder dergleichen befüllt wird und eine entsprechende Oberflächenbeschaffenheit der gegeneinander verschieb- bzw. verdrehbaren Teile eine viskose Dämpfung bewirkt. Beispielsweise können die Oberflächen mit Rillen oder Lamellen oder dergleichen versehen sein.

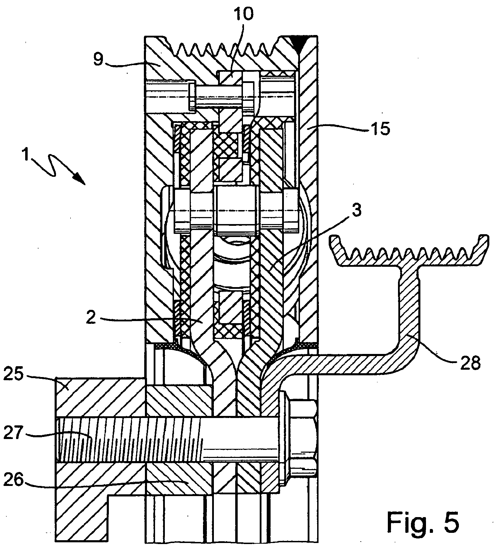

Fig. 5 zeigt eine Einbausituation eines Kurbelwellendämpfers 1 an einer Kurbelwelle 25. Zur axialen Positionierung des Kurbelwellendämpfers 1 an der Kurbelwelle 25 ist ein Zwischenring 26 zwischen beiden angeordnet. Schrauben 27, die durch die Bohrungen 4 geführt sind, sorgen für eine Befestigung des Kurbelwellendämpfers 1 zusammen mit dem Zwischenring 26 und einer Riemenscheibe 28 an der Kurbelwelle 25. Der Kurbelwellendämpfer 1 umfasst an seinem Außenumfang eine Riemenspur 29, über die weitere Aggregate angetrieben werden können.

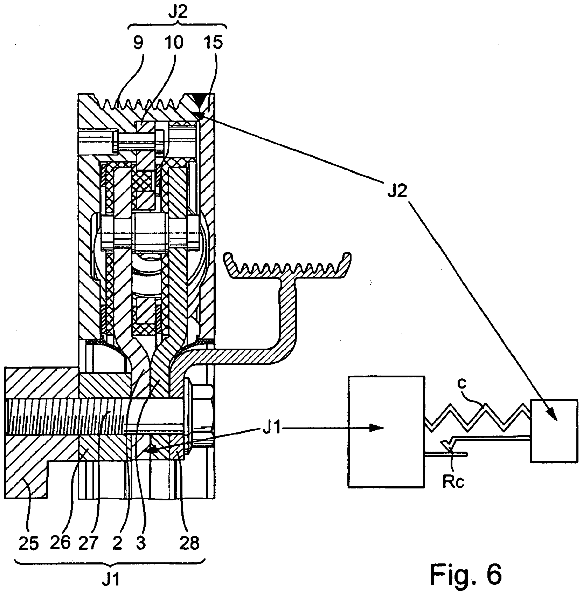

Fig. 6 zeigt ein Prinzipschaltbild des Kurbelwellendämpfers 1. Die kurbelwellenfesten Massen sind hier als J1 bezeichnet, dies sind insbesondere die Kurbelwelle 25, der Zwischenring 26, die Schrauben 27, die Riemenscheibe 28 sowie der kurbelwellenfeste Flansch 7 des Kurbelwellendämpfers 1. Die gegenüber den kurbelwellenfesten Massen beweglichen Baugruppen, insbesondere die Schwungmassenbaugruppe 8, sind hier als J2 bezeichnet. Die Schwungmassen J1 und J2 weisen jeweils ein Massenträgheitsmoment bezüglich der Rotation um die Achse 6 auf, dies kann auf ein Modell mit Massen für eine Linearbewegung abgebildet werden. Die Federsteifigkeit der Federn 12 ist hier als Federsteifigkeit C einer Zug-/Druckfeder dargestellt, die trockene Reibung zwischen den Wellscheiben 18 bis 21 und den Reibelementen 22 bis 24 ist als trockener Reibdämpfer RC dargestellt. Man erhält insofern ein schwingungsfähiges System mit Reibungsdämpfung.

### Bezugszeichenliste

- 1: Kurbelwellendämpfer
- 2: Vorderen Flansch
- 3: Hinterer Flansch
- 4: Bohrungen
- 5: Abstandsbolzen
- 6: Drehachse
- 7: Kurbelwellenfester Flansch
- 8: Schwungmassenbaugruppe
- 9: Schwungmasse
- 10: Schwungmassenflansch
- 11: Niete
- 12: Federn
- 12a: äußere Feder
- 12b: Innere Feder
- 13: Ausschnitt Schwungmassenflansch
- 14: Ausschnitt kurbelwellenfester Flansch
- 15: Deckscheibe
- 16: Dichtscheibe
- 17: Dichtscheibe
- 18: Reibring
- 19: Reibring
- 20: Reibring
- 21: Reibring
- 22: Reibelement
- 23: Reibelement
- 24: Reibelement
- 25: Kurbelwelle
- 26: Zwischenring
- 27: Schrauben
- 28: Riemenscheibe
- 29: Riemenspur
- 30: Kröpfung
- 31: Kröpfung
- 32: Ringförmiger Raum
- 33: Dämpferelement
- 34: Reibelement
- 35: Reibelement
- 36: Reibring
- 37: Reibring
- 38: Wellscheibe
- 39: Wellscheibe

## Patentansprüche

1. Vorrichtung (1) zur Dämpfung von Drehschwingungen einer Welle, umfassend eine wellenfeste erste Baugruppe (7) und eine gegenüber der ersten Baugruppe relativ um eine Drehachse (6) der Welle drehbare zweite Baugruppe (8), wobei zwischen erster und zweiter Baugruppe mindestens ein Energiespeicher (12) angeordnet ist, der bei einer Relativdrehung der ersten Baugruppe (7) gegenüber der zweiten Baugruppe (8) Energie speichert, wobei der Energiespeicher mindestens eine Druckfeder (12) umfasst, die in Ausschnitten (13, 14) der ersten und zweiten Baugruppe (7, 8) eingespannt ist und die Vorrichtung (1) mindestens ein Dämpferelement (33) umfasst, das bei einer Relativdrehung der ersten Baugruppe (7) gegenüber der zweiten Baugruppe (8) Energie dissipiert, **dadurch gekennzeichnet, dass** das Dämpferelement (33) trockene oder viskose Reibarbeit verrichtet, dass das Dämpferelement (33) Reibbeläge (18-25) umfasst, die jeweils drehfest mit der ersten Baugruppe (7) bzw. der zweiten Baugruppe (8) verbunden sind und aufeinander reibend gleiten können, und
dass das Dämpferelement (33) ein vorderes Reibelement (22) umfasst, das fest mit der ersten Baugruppe (7) verbunden ist, wobei ein vorderer äußerer Reibring (18) und/oder ein vorderer innerer Reibring (19), die fest mit der zweiten Baugruppe (8) verbunden sind, in Reibkontakt mit dem vorderen Reibelement (22) sind.

2. Vorrichtung nach Anspruch 2, **dadurch gekennzeichnet, dass** der vordere äußere Reibring (18) und der vordere innere Reibring (19) Teil einer vorderen Wellscheibe (38) sind.

3. Vorrichtung nach einem der Ansprüche 1 bis 2 oder, **dadurch gekennzeichnet, dass** das Dämpferelement (33) ein hinteres Reibelement (23) umfasst, das fest mit der ersten Baugruppe (7) verbunden ist, wobei ein hinterer äußerer Reibring (20) und/oder ein hinterer innerer Reibring (21), die fest mit der zweiten Baugruppe (8) verbunden sind, in Reibkontakt mit dem hinteren Reibelement (23) sind.

4. Vorrichtung nach Anspruch 3, **dadurch gekennzeichnet, dass** der hintere äußere Reibring (20) und der hintere innere Reibring (21) Teil einer hinteren Wellscheibe (39) sind.

5. Vorrichtung nach einem der vorstehenden Ansprüche, **dadurch gekennzeichnet, dass** die erste Baugruppe einen vorderen Flansch (2) und einen hinteren Flansch (3) umfasst, die fest miteinander verbunden sind und einen kurbelwellenfesten Flansch (7) bilden.

6. Vorrichtung nach Anspruch 5, **dadurch gekennzeichnet, dass** die Verbindung des vorderen Flansches (2) mit dem hinteren Flansch (3) durch Abstandsbolzen (5) erfolgt.

7. Vorrichtung nach Anspruch 5 oder 6, **dadurch gekennzeichnet, dass** der vordere Flansch (2) und der hintere Flansch (3) in einem radial äußeren Bereich Kröpfungen aufweisen, die einen ringförmigen Raum (32) bilden.

8. Vorrichtung nach einem der vorstehenden Ansprüche, **dadurch gekennzeichnet, dass** die zweite Baugruppe eine Schwungmasse (9) und einen Schwungmassenflansch (10) umfasst, die eine Schwungmassenbaugruppe (8) bilden.

9. Verfahren zur Dämpfung von Drehschwingungen einer Welle, wobei zwischen einer wellenfesten ersten Baugruppe (7) und eine gegenüber der ersten Baugruppe relativ um eine Drehachse (6) der Welle drehbaren zweiten Baugruppe (8) mindestens ein Energiespeicher (12) angeordnet ist, der bei einer Relativdrehung der ersten Baugruppe (7) gegenüber der zweiten Baugruppe (8) Energie speichert, wobei
- der Energiespeicher mindestens eine Druckfeder (12) umfasst, die in Ausschnitten (13, 14) der ersten und zweiten Baugruppe (7, 8) eingespannt ist;
- mindestens ein Dämpferelement (33) vorgesehen ist;, das bei einer Relativdrehung der ersten Baugruppe (7) gegenüber der zweiten Baugruppe (8) Energie dissipiert;
- das Dämpferelement (33) trockene oder viskose Reibarbeit verrichtet;
- das Dämpferelement (33) Reibbeläge (18-25) umfasst, die jeweils drehfest mit der ersten Baugruppe (7) bzw. der zweiten Baugruppe (8) verbunden sind und aufeinander reibend gleiten können.
- das Dämpferelement (33) ein vorderes Reibelement (22) umfasst, das fest mit der ersten Baugruppe (7) verbunden ist, wobei ein vorderer äußerer Reibring (18) und/oder ein vorderer innerer Reibring (19), die fest mit der zweiten Baugruppe (8) verbunden sind, in Reibkontakt mit dem vorderen Reibelement (22) sind.

## Claims

1. Apparatus (1) for damping torsional vibrations of a shaft, comprising a first assembly (7) which is fixed to the shaft and a second assembly (8) which can be rotated relative to the first assembly about a rotational axis (6) of the shaft, at least one energy store (12) being arranged between the first and the second assembly, which energy store stores energy during a relative rotation of the first assembly (7) with respect to the second assembly (8), the energy store comprising at least one compression spring (12) which is clamped in cut-outs (13, 14) of the first and second assembly (7, 8), and the apparatus (1) comprising at least one damper element (33) which dissipates energy during a relative rotation of the first assembly (7) with respect to the second assembly (8), **characterized in that** the damper element (33) performs dry or viscous friction work, **in that** the damper element (33) comprises friction linings (18-25) which are connected in each case fixedly to the first assembly (7) and the second assembly (8) so as to rotate with them, and can slide frictionally on one another, and **in that** the damper element (33) comprises a front friction element (22) which is connected fixedly to the first assembly (7), a front outer friction ring (18) and/or a front inner friction ring (19) which are connected fixedly to the second assembly (8) being in frictional contact with the front friction element (22).

2. Apparatus according to Claim 2, **characterized in that** the front outer friction ring (18) and the front inner friction ring (19) are part of a front corrugated washer (38).

3. Apparatus according to either of Claims 1 and 2, **characterized in that** the damper element (33) comprises a rear friction element (23) which is connected fixedly to the first assembly (7), a rear outer friction ring (20) and/or a rear inner friction ring (21) which are connected fixedly to the second assembly (8) being in frictional contact with the rear friction element (23).

4. Apparatus according to Claim 3, **characterized in that** the rear outer friction ring (20) and the rear inner friction ring (21) are part of a rear corrugated washer (39).

5. Apparatus according to one of the preceding claims, **characterized in that** the first assembly comprises a front flange (2) and a rear flange (3) which are connected fixedly to one another and form a flange (7) which is fixed to the crankshaft.

6. Apparatus according to Claim 5, **characterized in that** the front flange (2) is connected to the rear flange (3) by way of spacer pins (5).

7. Apparatus according to Claim 5 or 6, **characterized in that** the front flange (2) and the rear flange (3) have offsets in a radially outer region, which offsets form an annular space (32).

8. Apparatus according to one of the preceding claims, **characterized in that** the second assembly comprises a centrifugal mass (9) and a centrifugal mass flange (10) which form a centrifugal mass assembly (8).

9. Method for damping torsional vibrations of a shaft, at least one energy store (12) being arranged between a first assembly (7) which is fixed to the shaft and a second assembly (8) which can be rotated relative to the first assembly about a rotational axis (6) of the shaft, which energy store (12) stores energy during a relative rotation of the first assembly (7) with respect to the second assembly (8),
- the energy store comprising at least one compression spring (12) which is clamped in cut-outs (13, 14) of the first and second assembly (7, 8);
- at least one damper element (33) being provided which dissipates energy during a relative rotation of the first assembly (7) with respect to the second assembly (8);
- the damper element (33) performing dry or viscous friction work;
- the damper element (33) comprising friction linings (18-25) which are connected in each case fixedly to the first assembly (7) and the second assembly (8) so as to rotate with them, and can slide frictionally on one another;
- the damper element (33) comprising a front friction element (22) which is connected fixedly to the first assembly (7), a front outer friction ring (18) and/or a front inner friction ring (19) which are connected fixedly to the second assembly (8) being in frictional contact with the front friction element (22).

## Revendications

1. Dispositif (1) pour l'amortissement des vibrations de torsion d'un arbre, comprenant un premier module fixé à l'arbre (7) et un deuxième module (8) pouvant tourner relativement par rapport au premier module autour d'un axe de rotation (6) de l'arbre, au moins un accumulateur d'énergie (12) étant disposé entre le premier et le deuxième module, lequel, lors d'une rotation relative du premier module (7) par rapport au deuxième module (8), accumule de l'énergie, l'accumulateur d'énergie comprenant au moins un ressort de compression (12) qui est serré dans les découpes (13, 14) du premier et du deuxième module (7, 8) et le dispositif (1) comprenant au moins un élément amortisseur (33) qui, lors d'une rotation relative du premier module (7) par rapport au deuxième module (8), dissipe de l'énergie, **caractérisé en ce que** l'élément amortisseur (33) effectue un travail de friction à sec ou visqueux, **en ce que** l'élément amortisseur (33) comprend des garnitures de friction (18-25) qui sont à chaque fois connectées de manière solidaire en rotation au premier module (7), respectivement au deuxième module (8), et peuvent glisser l'une sur l'autre avec friction, et
**en ce que** l'élément amortisseur (33) comprend un élément de friction avant (22) qui est connecté fixement au premier module (7), et une bague de friction extérieure avant (18) et/ou une bague de friction intérieure avant (19), qui sont connectées fixement au deuxième module (8), étant en contact de friction avec l'élément de friction avant (22).

2. Dispositif selon la revendication 2, **caractérisé en ce que** la bague de friction extérieure avant (18) et la bague de friction intérieure avant (19) font partie d'un disque d'arbre avant (38).

3. Dispositif selon l'une quelconque des revendications 1 à 2, **caractérisé en ce que** l'élément amortisseur (33) comprend un élément de friction arrière (23) qui est connecté fixement au premier module (7), une bague de friction extérieure arrière (20) et/ou une bague de friction intérieure arrière (21), qui sont connectées fixement au deuxième module (8), étant en contact de friction avec l'élément de friction arrière (23).

4. Dispositif selon la revendication 3, **caractérisé en ce que** la bague de friction extérieure arrière (20) et la bague de friction intérieure arrière (21) font partie d'un disque d'arbre arrière (39).

5. Dispositif selon l'une quelconque des revendications précédentes, **caractérisé en ce que** le premier module comprend une bride avant (2) et une bride arrière (3), qui sont connectées fixement l'une à l'autre et forment une bride (7) fixée à l'arbre coudé.

6. Dispositif selon la revendication 5, **caractérisé en ce que** la connexion de la bride avant (2) à la bride arrière (3) s'effectue par des boulons d'espacement (5).

7. Dispositif selon la revendication 5 ou 6, **caractérisé en ce que** la bride avant (2) et la bride arrière (3) présentent des coudes dans une région radialement extérieure, lesquels forment un espace annulaire (32).

8. Dispositif selon l'une quelconque des revendications précédentes, **caractérisé en ce que** le deuxième module comprend une masse d'inertie (9) et une bride de masse d'inertie (10) qui forment un module de masse d'inertie (8).

9. Procédé d'amortissement des vibrations de torsion d'un arbre, au moins un accumulateur d'énergie (12) étant disposé entre un premier module (7) fixé à l'arbre et un deuxième module (8) pouvant tourner relativement par rapport au premier module autour d'un axe de rotation (6) de l'arbre, lequel accumulateur d'énergie, lors d'une rotation relative du premier module (7) par rapport au deuxième module (8), accumule de l'énergie,
- l'accumulateur d'énergie comprenant au moins un ressort de compression (12) qui est serré dans des découpes (13, 14) du premier et du deuxième module (7, 8) ;
- au moins un élément amortisseur (33) étant prévu, lequel, lors d'une rotation relative du premier module (7) par rapport au deuxième module (8), dissipe de l'énergie,
- l'élément amortisseur (33) effectuant un travail de friction à sec ou visqueux ;
- l'élément amortisseur (33) comprenant des garnitures de friction (18-25) qui sont à chaque fois connectées de manière solidaire en rotation au premier module (7), respectivement au deuxième module (8), et peuvent glisser l'une sur l'autre avec friction ;
- l'élément amortisseur (33) comprenant un élément de friction avant (22) qui est connecté fixement au premier module (7), une bague de friction extérieure avant (18) et/ou une bague de friction intérieure avant (19), qui sont connectées fixement au deuxième module (8), étant en contact de friction avec l'élément de friction avant (22).
